# EUROPEAN PATENT SPECIFICATION

(11) **EP 4 680 358 B1**
(45) Date of publication and mention of the grant of the patent: **25.11.2026**
(21) Application number: 24713941.3
(22) Date of filing: 18.03.2024
(51) Int. Cl.: B01D 19/00, B04C 5/04, C25B 1/04

(54) **METHOD FOR GENERATING AND TREATING A TWO-PHASE OUTFLOW FROM ONE OR MORE PRESSURIZED ELECTROLYSER STACKS AND ELECTROLYSER SYSTEM COMPRISING ONE OR MORE INDIVIDUAL PRESSURIZED ELECTROLYSER STACKS**
VERFAHREN ZUR ERZEUGUNG UND BEHANDLUNG EINES ZWEIPHASENAUSFLUSSES AUS EINEM ODER MEHREREN DRUCKELEKTROLYSESTAPELN UND ELEKTROLYSESYSTEM MIT EINEM ODER MEHREREN DRUCKELEKTROLYSESTAPELN
PROCÉDÉ DE GÉNÉRATION ET DE TRAITEMENT D'UN ÉCOULEMENT À DEUX PHASES À PARTIR D'UN OU DE PLUSIEURS EMPILEMENTS D'ÉLECTROLYSEUR SOUS PRESSION ET SYSTÈME D'ÉLECTROLYSEUR COMPRENANT UN OU PLUSIEURS EMPILEMENTS D'ÉLECTROLYSEUR SOUS PRESSION INDIVIDUELS

(30) Priority: 16.03.2023 DK PA202300238
(43) Date of publication of application: 21.01.2026
(73) Proprietor: thyssenkrupp nucera AG & Co. KGaA, 44269 Dortmund (DE)
(72) Inventor: SCHULTZ-FALK, Vickie, 6000 Kolding (DK); GØBEL FÜCHTBAUER, Henrik, 6000 Kolding (DK)
(86) International application number: PCT/EP2024/057161
(87) International publication number: WO 2024/189233

(56) References cited:
- WO-A1-2015/133647
- CN-A- 113 278 991
- CN-A- 115 040 902
- US-A- 4 323 442
- US-A1- 2011 031 194
- US-A1- 2011 139 625
- US-B1- 6 338 786
- US-B2- 7 326 329

## Description

The present invention relates to a method for generating and treating a two-phase outflow from one or more pressurized electrolyser stacks, Further, the invention relates to an electrolyser system comprising one or more individual pressurized electrolyser stacks.

### Background of the invention

In electrolysers adapted to produce hydrogen and oxygen by electrolysation of water and where the electrolyser comprises a stack of cells where each cell comprises a first half cell with an electrode such as a cathode at which hydrogen is released and forms bubbles in the electrolyte fluid, also named catholyte, and each cell further comprises a second half cell with an electrode such as an anode at which oxygen is released and forms bubbles in the electrolyte (also named anolyte) and a two phase material stream of electrolyte and gas bubbles of hydrogen and oxygen respectively will exit each half cell. Stack internal and stack external manifolds are arranged to capture the material stream from each of the cathodic half cells and pipe this material stream into a gas electrolyte gravitational separator and likewise for each of the anodic half cells. Thereby the system shall comprise a hydrogen separator vessel and an oxygen separator vessel. If a multitude of stacks are used, stack external manifold systems shall be provided to ensure that all of the material streams which exits the cathodic half cells is piped into a hydrogen separation vessel, and all of the material streams which exits the anodic half cells is piped into an oxygen separation vessel. The needed volume of separation vessels for the gas and fluid to have time to separate sufficiently from each other is adding significant costs to electrolyser systems. It has been proposed to use further separation elements such as cyclone gas liquid separators, (US Patent 4505789 and US6338786B1) however the outcomes were not convincing. The invention seeks to arrange a cyclonic separator in combination with a gravitational separator to achieve superior performance of the combination of the two principles of separation to enable use of a smaller gravitational gas liquid separators and/or improved separation of the two phases: gas and liquid. It is further known from prior art to use a multitude of smaller cyclones arranged in parallel to ensure better liquid gas separation. Such cyclones are customarily arranged with a vertical cyclone axis and maintained in arrays close to each other, and could in principle be arranged inside of a gravitational separator vessel, but would require further piping to ensure even distribution of the gas/liquid flow to each one of such a multitude of separators.

### Summary of the invention

In a first aspect, the objects of the invention are achieved by a method for generating and treating a two-phase outflow from one or more pressurised electrolyser stacks which are adapted to electrolyse water into hydrogen and oxygen, wherein
I. a catholytic fluid pump supplies a catholytic fluid flow from one first gas liquid gravitational separator vessel to the electrolyser stack or stacks which fluid flow is distributed in each stack into a range of catholytic chambers or half-cells each comprising a hydrogen generating cathode;
II. an anolytic fluid pump supplies an anolytic fluid flow from one second gas liquid gravitational separator vessel to the electrolyser stack or stacks which fluid flow is distributed in each stack into a range of anolytic chambers or half-cells each comprising an oxygen generating anode;
III. every catholytic chamber delivers a fraction of a hydrogen containing catholyte, two phase stream to the first gas liquid separator vessel;
IV. every anolytic chamber delivers a fraction of oxygen containing anolyte, two phase stream to the second gas liquid gravitational separator vessel; and
V. wherein
   a. at least one cyclone type gas liquid separator arranged inside the first gravitational gas liquid separator vessel receives combined outflows from the catholytic chambers, or
   b. at least one cyclone type gas liquid separator arranged inside the second gravitational gas liquid separator vessel receives combined outflows from anolytic chambers, or
   c. at least one cyclone type gas liquid separator arranged inside the first gravitational gas liquid separator vessel receives combined outflows from the catholytic chambers and another at least at least one cyclone type gas liquid separator arranged inside the second gravitational gas liquid separator vessel receives combined outflows from the anolytic chambers.

To mitigate the above shortcomings, the at least one cyclone type gas liquid separator separates the gas from the liquid along a generally horizontal cyclonic rotation axis inside the gas liquid gravitational separator vessel.

By the generally horizontal axis cyclone, a separator vessel which has a tube-like structure with a vertical axis and arranged parallel to the cyclone axis may be employed, and thereby even a long cyclone instrument will fit into the separator vessel, and at the same time a large fluid surface may be provided in the gravitational type separator without excessively increasing the diameter of this vessel. This is particularly important when a pressurized alkaline water electrolysis system is used, as the corrosive nature of the electrolyte fluid demands high quality steel to be used, and the demand on thickness grows excessively with largest diameter of pressure vessels. In today's high pressure water electrolyser systems, pressures up to around 50 bars are used, however higher pressures, such as up to 150 bars are already being contemplated, and in such systems, the need for downsizing the pressure vessels will be pertinent and use of a combination of gravitational and cyclonic separators are instrumental in reaching the goals of smaller gravitational gas liquid separators. It is further noted that the horizontal alignment of the axes of gravitational and cyclone type separators, allows not only a long cyclone but also the cyclone can have a diameter up to the same diameter size as the separator vessel, assuming that the gravitational separator is circular cylindrical.

By the term "generally horizontal" a horizontal orientation of the cyclone axis is understood which does not deviate more than 5 degrees, or more preferred more than 10 degrees or most preferred does not deviate more than 15 degrees from a horizontal axis.

In an embodiment of the invention the at least one cyclone type gas liquid separator exits a mainly liquid material stream above a liquid gas interface and directs this stream in a generally horizontal direction towards a deflection plate inside of the gravitational separator vessel.

No gas liquid cyclone type separator is ideal, and some gas will be present in the liquid exit material stream and some liquid is bound to be present in the gas exit material stream. One of the two: the liquid exit and the gas exit may be close to free from gas or fluid however this always leads to the other exit being more polluted with the un-wanted substance. The term "mainly" with regards to the gas content of the liquid exit, reflects this aspect of the cyclone type gas liquid separator. It is a design choice whether to focus on a pure gas at the sacrifice of a less pure liquid or to focus on a pure liquid at the sacrifice of a gas containing a higher percentage of liquid therein. Whether or not the liquid exiting the cyclone type gas liquid separator comprises more or less gas, it is important that the liquid flow into the gravitational type gas liquid separator body of liquid dos not disturb this body of liquid and causes un-wanted turbulence therein, and thus a deflection plate is arranged to receive the liquid, in order that the liquid flow is diverted into a multitude of minor spaced apart liquid flows each of which will not cause significant disturbance of the liquid body in the separator and due to their spaced apart nature, they will cause only local disruption of the liquid flow along a length axis inside the gas liquid gravitational separator.

In an embodiment the at least one cyclone type gas liquid separator exits a mainly gaseous material stream along a generally horizontal axis above a liquid gas interface inside of the gravitational separator vessel.

A gas exit from the gravitational separator is provided distanced from the gas type exit of the cyclone type gas liquid separator, which allows the gas to flow at low speed towards the this exit inside the gravitational separator, such that droplets possibly present in the gas which is to exit the gas exit of the cyclone type separator may settle and precipitate into the fluid prior to exiting the gravitational separator. It is possible also to arrange a demister at the gas exit of the cyclone type gas liquid separator, and such a demister would benefit from the rather high velocity of the gas passing out of the cyclone type separator. It is advantageous to also provide a coalescence filter between the output of the cyclone and the gas outlet of the gravitational separator to thereby remove even tiny droplets from the gas stream passing above the liquid surface in the gravitational separator. When the flow of mainly gas exits the cyclone it will produce a cone shaped region of high-speed gas outflow along an outflow axis, and in case a high electrolyte level is present within the gas liquid gravitational separator vessel such as a level which is adjacent to the lower inner surface of the gas outlet tube from the cyclone, the gas outflow cone may disturb the liquid surface and cause renewed mixing between gasses and the liquid, and to avoid this, it is suggested to arrange the cyclone with an axis which is angled as much as 5 degrees from horizontal, pointing the liquid output end slightly downward and the gas output end slightly up-wards relative to the horizontal direction. Alternatively, a small pipe stub is added to the gas outflow orifice, which may direct the flow in an upward direction at an angle of no less than 5 degrees and no more than 15 degrees from horizontal.

In an embodiment of the invention each pump delivers a predefined pressure increase between the respective gas liquid gravitational separator vessels and the inflow at the stacks, whereby this pressure increase is adapted to ensure a minimum catholyte and anolyte flow rate through the gas liquid cyclone type separators inside of the respective gravitational gas liquid separators when the stack or stacks are electrolyzing water into hydrogen and oxygen.

The pumps must overcome pressure losses in the electrolyte flow circuit given a predefined flow velocity through each half cell, and also overcome the pressure losses provoked by the presence of the cyclone type gas liquid separator. Thus, when the gas liquid cyclone type separator is used and provokes an additional pressure drop at a given flowrate, this must be considered by way of added pumping power. The specific and detailed construction of the gas liquid cyclone type separator determines the needed further delivery pressure and pumping rate capability of the pump.

In an embodiment the at least one cyclone type gas liquid separator receives the inflow of the combined gas liquid material stream through a vertically arranged pipe extending into the gravitational gas liquid separator vessel from below.

This arrangement ensures, that the pipe supplying the material stream to the cyclone type gas liquid separator have as few bends as possible, and thereby the lowest possible pressure loss.

In a further aspect, the invention concerns an electrolyser system having one or more individual pressurised electrolyser stacks, wherein
- a first single gravitational gas liquid separator is in fluid communication with all of the anolytic process chambers of the stacks by way of at least one pump and corresponding piping, and
- a second single gravitational gas liquid separator is in fluid communication with all of the catholytic process chambers of the stacks by way of at least one pump and corresponding piping,
wherein the pumps are inserted in each of pipe lines adapted to draw liquid free of gas from a bottom part of the gravitational gas liquid separator vessels, and feed the liquids at elevated pressures to the process chambers of the stack or stacks.

Preferably,
a. at least one cyclone type gas liquid separator (20) is arranged inside the first gravitational gas liquid separator vessel (24) to receiv combined outflows (28) from the catholytic chambers (5), or
b. at least one cyclone type gas liquid separator (20) is arranged inside the second gravitational gas liquid separator vessel (23) to receive combined outflows (29) from anolytic chambers (4), or
c. at least one cyclone type gas liquid separator (20) is arranged inside the first gravitational gas liquid separator vessel (24) to receive combined outflows (28) from the catholytic chambers (5) and another at least at least one cyclone type gas liquid separator (20) is arranged inside the second gravitational gas liquid separator vessel (23) to receive combined outflows (29) from the anolytic chambers (4).

The at least one cyclone type gas liquid separator is configured for separating the gas from the liquid along a generally horizontal cyclonic rotation axis inside the respective gas liquid gravitational separator vessel.

In one embodiment, at least one horizontal axis cyclone type gas liquid separator is arranged inside of each of the gravitational gas liquid separators.

In a further embodiment, each of the at least one cyclones is arranged to exit a stream of mainly liquid along a generally horizontal axis towards a deflection plate above a gas liquid interface of the gravitational gas liquid separator, and has a gas exit opening adapted to exit a stream of mainly gas along a generally horizontal axis into the gravitational separator vessel above the gas liquid interface.

The horizontal axis exit of the mainly liquid output and mainly gaseous output from the cyclone type liquid gas separator allows the body of liquid in the gravitational gas liquid separator to remain largely un-disturbed by the relatively forceful stream of liquid and gas out of the cyclone type separator. The provision of a deflection plate adapted to receive the liquid flow out of the cyclone shall ensure, that the liquid stream out of the cyclone fuses with the liquid flow inside the gas liquid separator vessel without essentially disturbing the liquid flow in the gravitational separator.

The pumps are adapted to provide a pressure increase and corresponding flow rate, whereby any pressure losses in a cyclone type separator is compensated for by increased pump pressure.

Due to the formation of bubbles in the electrolyte liquid by the released gasses, there will be a gravitational lift in the fluid exiting the catholythic and anolythic half-cells or chambers, and in addition, the fluid is likely to also be heated by the cathodic and anodic electric potential differences, which again adds lift to the fluid. In some prior art water electrolysis stacks, pumps are not used, however it has been discovered that enhanced fluid flow through the half-cells of a stack provides some benefits, such as reduced temperature difference between inlet and outlet of half cells and thus the system according to the invention includes a pump. In order to avoid decrease of the flow rate through the individual half cells of the stack or stacks, the pump rates are increased in order to cope with possible increased flow resistance from the cyclone type separators.

In an embodiment of the invention the gas liquid inflow pipe into the cyclone is provided along a vertical axis from below and further, the pipe merges tangentially with a cylindrical inflow part of the cyclone separator, which cylindrical inflow part has a generally horizontal centre axis.

Due to the gravitational lift of the fluids and gasses exiting the stacks, it is customary to arrange the separators above the stacks and to pipe the two phase flows from the electrolyser stacks into the separator vessels through an endpart thereof and onto tray-separators, which are arranged within the gravitational separator to ensure that the fluid flow is extended over a wide area, and becomes thinned out while passing along the trays. By piping the flow vertically into the vessel from below, the pipes are subject to fewer bends between the separator and the stacks.

According to an embodiment of the invention a frustoconical cyclonic flow path of the cyclone is connected to the cylindrical inflow part and supported from below by a beam connected to the liquid inflow pipe.

By this construction the cyclone type gas liquid separator may be supported exclusively by the pipe leading the two-phase material flow into the respective separator lending simplicity to the system. Also, the cyclone is arranged within the gravitational separator vessel without touching any other surface, perched on top of the inflow pipe.

In an embodiment the deflection plate for the fluid output from the cyclone is an endplate which is also adapted to serve as an openable flanged endplate for inspection of the gravitational separator vessel.

The endplate of the separator vessel being an openable flange for inspection as well as a deflection plate ensures that the cyclone type separator, as well as the deflection plate are easily inspected.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor requires the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

It should be emphasized that the term "comprises/comprising/comprised of" when used in this specification is taken to specify the presence of stated features, integers, steps or components but does not preclude the presence or addition of one or more other features, integers, steps, components or groups thereof.

### Brief description of the drawings

In the following, the invention will be described in greater detail with reference to embodiments shown by the enclosed figures. It should be emphasized that the embodiments shown are used for example purposes only and should not be used to limit the scope of the invention.
Fig. 1 is a schematic representation of one of the two electrolyte circulation system in an electrolyser system,
Fig. 2 shows the electrolyte circulation systems in an electrolyser system, not disclosed in Fig. 1,
Fig. 3 shows an overall flow diagram of an electrolyser system,
Fig. 4 is a sectional view through a gravitational separator with a cyclone type separator arranged therein,
Fig. 5 is a sectional view along line D-D in Fig. 4, and
Fig. 6 shows the cyclone in sideview (left), frontal view (mid) and sectional view (right).

### Detailed description of the embodiments

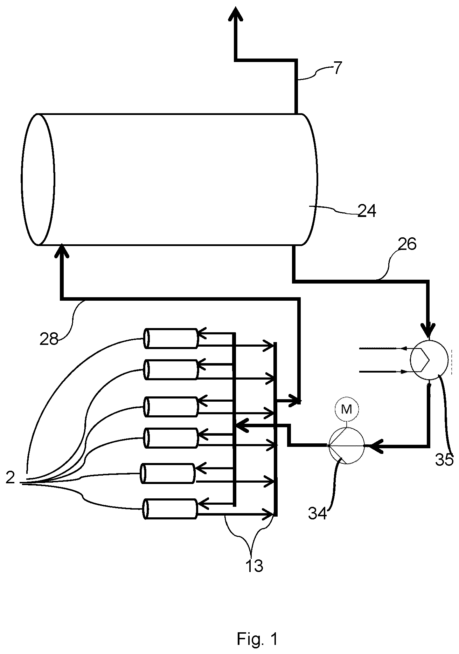

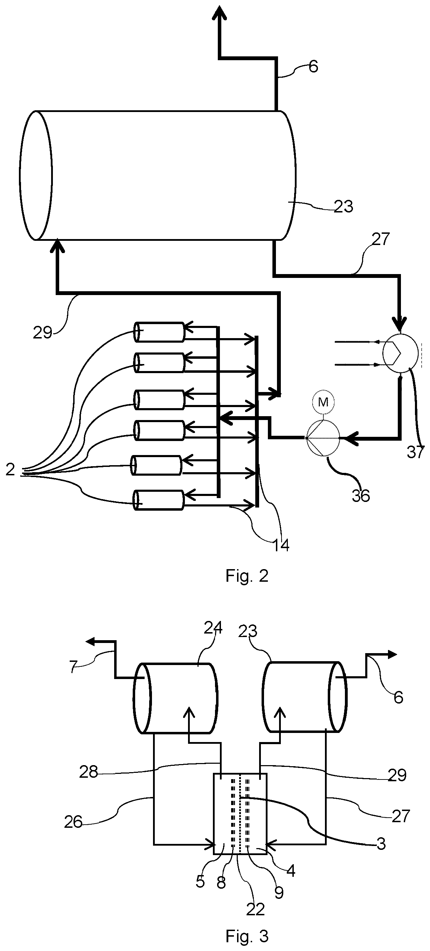

Fig. 1 and Fig. 2 discloses the same system, where Fig. 1 shows the stacks 2 with the catholyte fluid flow system, and Fig. 2 shows the same stacks but now connected to the anolyte fluid flow system. In a complete system, the stacks are connected to both catholyte and anolyte fluid flow systems. In Fig. 3 the essentials of both fluid flow systems are shown, however connected to only one cell 22. This one cell 22 then represents the multitude of single cells in each of the 6 stacks shown in Figs. 1 and 2.

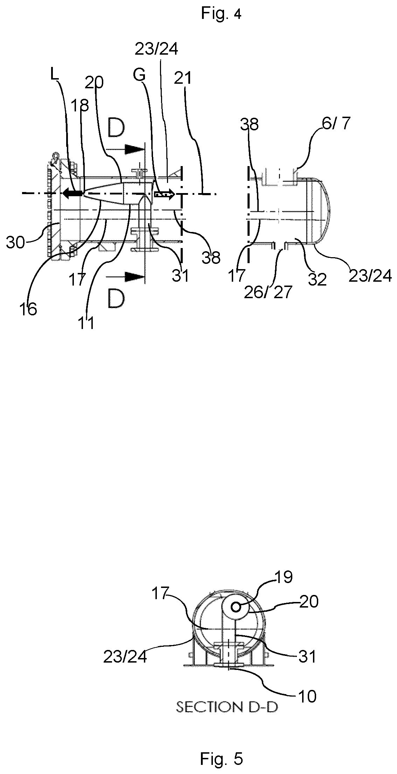

In Fig. 1 the gravitational separator vessel 24 is shown with a hydrogen outflow pipe 7, and the product gas which exits the outflow pipe 7 is usually cleaned and served at a recipient, such as a tank facility or distribution system (not shown). A catholyte fluid flow and pipe 26 or anolyte fluid flow and pipe 27 are indicated in Fig. 4, and it can be seen, that this fluid flow and pipe exits the separators at a bottom part 32 thereof, whereas the gas outflow piping 6, 7 is provided at a top part of the separators. In Figs. 1 and 2 the electrolyte flow 26, 27 out of the separators 23, 24 are passed through each their heat exchanger 35, 37 and entered each their pump 34, 36 and into a stack external manifold to be served at each of a number of stacks 2. In each stack 2, stack internal manifold systems shall then distribute the anolyte and catholyte flows to a number of half cells arranged next to each other in the manner indicated in Fig. 3, whereby each single cell 22 shall comprise a catholytic process chamber or half cell 5 comprising a hydrogen generating cathode 8, and an anolytic process chamber of half cell 4 comprising an oxygen generating anode 9, where the two half cells are separated from each other by a diaphragm 3, which is adapted to prevent mixing of the produced gasses.

Between adjacent cells, a bipolar plate (not shown) shall be provided and be electrically coupled to cathode and anode on respective sides thereof. As is known in the art, each stack shall comprise two electric current injectors, one at each end of the stack and current shall travel through a range of cells arranged between the current injectors (nots shown) alternatingly passing through the bipolar plate and electrodes and through the electrolyte between the anode and cathode. The diaphragm shall be saturated with electrolyte and thus allow passage of ions and/or electrons.

Each anolyte and each catholyte chamber shall deliver a fraction of the electrolyte gas mixture which is piped into the respective separator 23,24 by way of stack external manifold two phase catholyte/hydrogen and two- phase anolyte/oxygen flow pipes 28,29. Inside each separator, a cyclone type gas liquid separator 20 receives the material stream stemming from the respective ranges of half cells 4,5 in the stacks 2. In an embodiment (not shown), only in one of the first gas liquid gravitational separator vessel 24 or the second gas liquid gravitational separator vessel 23, a cyclone type gas liquid separator is provided.

In each stack 2, some heat shall be generated and thus each of the catholyte and anolyte flows drawn from the separators 23, 24 shall be passed through a heat exchanger 35,37.

An advantage of having such a cyclone type gas liquid separator 20 inside the respective separators 23, 24 is also that the pressure differences between the inside and outside of the cyclone type separator 20 inside of the gravitational gas liquid separator shall be limited, which allows the cyclone to be made in less thick steel plate, than would be the case for a cyclone outside of the gravitational separation vessels. This is especially important as there is a drive towards higher pressures in alkaline pressurized electrolyser plants, where currently pressures between 30 and 50 bars are common, but pressures in the range between 80 and 150 bars or even higher are under consideration.

As seen in Fig. 4, the cyclone type separator 20 has a generally horizontal rotational axis 21 and the outflow of liquid, indicated by arrow L, as well as the outflow of gas, indicated arrow G, shall pass along this axis 21 and into the gravitational type separator 23, 24, as the outflow opening 18 for the mainly liquid material stream L is directed along the horizontal rotational axis 21 and similarly the outflow opening 19 for the mainly gas material stream G is directed along the horizontal rotation axis of the cyclone. However, the two openings 18, 19 are directed in opposed directions. As seen in Fig. 4 and Fig. 5 the gravitational type gas liquid separator vessel 23, 24 has a cylindrical shape with a horizontal centre axis 38. This constitution allows a cylindrical inflow part 16 of the cyclone 20 to have an outer diameter which corresponds to the inner diameter of the gravitational separation vessel 23, 24. In the presented embodiment in Figs. 4 and 5, the diameter of the cylindrical inflow part 16 is somewhat smaller than the diameter of the gravitational separator 23, 24.

The cylindrical inflow part 11 of the cyclone is connected to a frustoconical flow path 16, arranged along the horizontal rotation axis of the cyclone, and the narrowing frustoconical flow path 16 towards a most narrow part, namely an exit opening 18, will force the circulating liquid inwardly towards the centre axis 21 and due to momentum conservation, this will lead to increased circulation speed, and increase separation between gas and liquid parts of the flow.

The frustoconical circulation path 16 is terminated by the cyclone liquid exit opening 18, which is pointed in the direction of a deflection plate /openable flanged endplate 30. The deflection plate 30 shall cause the mainly liquid material stream outflow L from the exit opening 18 to fan out in a multitude of minor flow parts, which shall eventually merge with the liquid residing below the liquid surface 17 inside the gravitational separator 20. This will take place without significantly disturbing the liquid below the surface 17, which should preferably flow un-disturbed towards an opposed end of the gravitational separator to allow even small gas bubbles in the liquid to rise to the surface, such that gas depleted electrolyte liquid may be drawn from a bottom part 32 of the gravitational separator at an end part distal to the endplate or deflector plate 30.

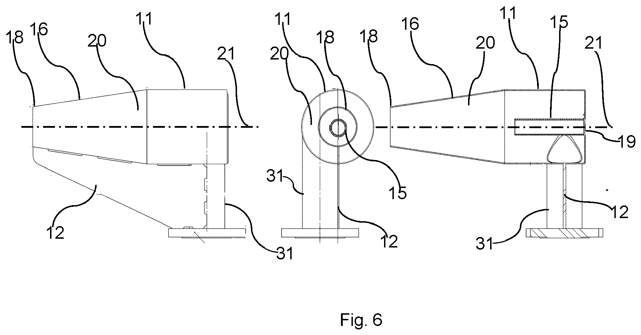

As seen in Fig. 6, a gas exit opening 19 is provided opposite to the liquid exit opening 18 and thus points away from the deflection plate 30 and towards an opposed end of the gas liquid gravitational separator 23, 24. The exit opening 19 is also the termination of a pipe element 15, which extends centrally into the cylindrical inflow part 11 of the cyclone 20 as seen in Fig. 6 right side. The pipe element 15 allows the gas, which has become separated from the fluid to exit without drawing substantial fluid elements out of the cyclone. The pipe element 15 is also termed "vortex finder" and its inner diameter balances the pressure drop experienced by the liquid and gas phases respectively. It would be possible to mount the cyclone slightly tipped with respect to the horizontal axis 21 and especially tipping the cyclone liquid exit opening 18 downward, while simultaneously tipping the cyclone gas exit opening 19 slightly upward, and an effect of such a mounting would be that a cone shaped outflow fan of gas exiting the cyclone gas exit opening 19, would disturb the gas liquid interface or electrolyte surface 17 less. This is particularly relevant, when the surface 17 his high, and especially higher than shown in Fig. 5. The gas liquid interface 17 may be as high as the underside of lowermost portion of the cyclone gas exit opening 16.

As mentioned, the separation between fluid and gas is not perfect, and some liquid elements shall escape with the gas flow G and some gas will be present in the liquid outflow L. Thus, the gravitational separator, which receives both liquid and gas outflows G, L from the cyclone shall work further with these flows, and the gas shall flow along a generally horizontal axis above the liquid surface 17 towards an outflow opening 6, 7 in respective ones of the gravitational separators 23, 24. The length and diameter of the gravitational separator 23, 24 may be diminished somewhat due to the presence of the cyclonic separator 20 inside it.

The cyclone type separator 20 will impart a pressure increase between the inside of the gravitational separator 23,24 and the stack inflow openings, and the pumps 34,36 shall thus muster a higher rise in pressure between their respective in and outflow openings in order to drive the anolyte and catholyte liquid flows through the stacks 2 and the cyclone 20.

As seen in Figs. 4, 5 and 6, the inflow pipe 31 to the cyclone 20 enters into the gravitational separator 23,24 from below and along a vertical axis 10. This vertical pipe 31 merges with its outer perimeter tangentially into the cylindrical inflow part 11 of the cyclone 20.

As seen in the representations in Fig. 6, a beam 12 is provided to support the frustoconical flow path 16. The beam 12 may be attached to the vertical inflow pipe 31. The beam 12 adds strength to the construction, and relieves the intersection between the vertical inflow pipe 31 and horizontally arranged cylindrical inflow part 11 of the cyclone from unsupportable stresses, and also ads stiffness to the cyclone construction whereby un-desirable vibrations are also avoided.

It is to be noted that the figures and the above description have shown the example embodiments in a simple and schematic manner. Many of the specific mechanical details have not been shown since the person skilled in the art should be familiar with these details and they would just unnecessarily complicate this description.

### List of parts

- 2: Pressurised electrolyser stack
- 3: Diaphragm
- 4: Anolytic process chamber or half-cell
- 5: Catholytic process chamber of half cell
- 6: Oxygen outflow
- 7: Hydrogen outflow
- 8: Hydrogen generating cathode
- 9: Oxygen generating anode
- 10: Vertical axis
- 11: Cylindrical inflow part
- 12: Beam
- 13: Two phase hydrogen catholyte outflow external piping
- 14: Two phase oxygen anolyte outflow external piping
- 15: Pipe element
- 16: frustoconical circulation path
- 17: Gas liquid interface or electrolyte surface
- 18: Cyclone liquid exit opening
- 19: Cyclone gas exit opening
- 20: Cyclone type gas liquid separator
- 21: Cyclonic rotation axes
- 22: Single cell
- 23: Second gas liquid gravitational separator vessel (anolyt +O2)
- 24: First gas liquid gravitational separator vessel (catholyt +H2)
- 26: Catholytic fluid flow and piping
- 27: Anolytic fluid flow and piping
- 28: Two phase catholyte/hydrogen flow pipe and outflow material stream
- 29: Two phase anolyte/oxygen flow pipe and outflow material stream
- 30: Deflection plate or openable flanged endplate
- 31: Inflow pipe
- 32: Bottom part of gas liquid gravitational separator vessel (anolyt + O2 or catholyte + H2)
- 34: Catholytic fluid pump
- 35: Heat exchanger catholytic flow
- 36: Anolytic fluid pump
- 37: Heat exchanger catholytic flow
- 38: Centre axis of gas liquid gravitational separator vessel.
- L: Mainly liquid material stream
- G: Mainly gas material stream

## Claims

1. A method for generating and treating a two-phase outflow from one or more pressurised electrolyser stacks (2), which pressurised electrolyser stacks (2) are adapted to electrolyse water into hydrogen and oxygen, wherein
I. a catholytic fluid pump (34) supplies a catholytic fluid flow (26) from one first gas liquid gravitational separator vessel (24) to the electrolyser stack or stacks (2), which fluid flow (26) is distributed in each stack into a range of catholytic chambers (5) or half-cells each comprising a hydrogen generating cathode (8);
II. an anolytic fluid pump (36) supplies an anolytic fluid flow (27) from one second gas liquid gravitational separator vessel (23) to the electrolyser stack (2) or stacks which fluid flow is distributed in each stack into a range of anolytic chambers (4) or half-cells each comprising an oxygen generating anode (9);
III. every catholytic chamber (5) delivers a fraction of a hydrogen containing catholyte, two phase stream (13) to the first gas liquid separator vessel (24);
IV. every anolytic chamber (4) delivers a fraction of oxygen containing anolyte, two phase stream (14) to the second gas liquid gravitational separator vessel (23);
V. in which method
a. at least one cyclone type gas liquid separator (20) arranged inside the first gravitational gas liquid separator vessel (24) receives combined outflows (28) from the catholytic chambers (5), or
b. at least one cyclone type gas liquid separator (20) arranged inside the second gravitational gas liquid separator vessel (23) receives combined outflows (29) from anolytic chambers (4), or
c. at least one cyclone type gas liquid separator (20) arranged inside the first gravitational gas liquid separator vessel (24) receives combined outflows (28) from the catholytic chambers (5) and another at least at least one cyclone type gas liquid separator (20) arranged inside the second gravitational gas liquid separator vessel (23) receives combined outflows (29) from anolytic chambers (4); and
VI. wherein the at least one cyclone type gas liquid separator (20) separates the gas from the liquid along a generally horizontal cyclonic rotation axis (21) inside the respective gas liquid gravitational separator vessel (23,24).

2. The method according to claim 1, whereby the at least one cyclone type gas liquid separator (20) exits a mainly liquid material stream (L) above a liquid gas interface and direct this stream in a generally horizontal direction towards a deflection plate (30) inside of the gravitational separator vessel (23,24).

3. The method according to claim 1 or 2, wherein the at least one cyclone type gas liquid separator (20) exits a mainly gaseous material stream (G) along a generally horizontal axis (21) above a liquid gas interface inside of the gravitational separator vessel (23,24).

4. The method according to any one of the claims 1-3, whereby each pump (34, 36) delivers a predefined pressure increase between the respective gas liquid gravitational separator vessels (23,24) and the inflow at the stacks (2), whereby this pressure increase is adapted to ensure a minimum catholyte and anolyte flow rate through the gas liquid cyclone type separators (20) inside of the respective gravitational gas liquid separators (23,24) when the stack or stacks (2) are electrolyzing water into hydrogen and oxygen.

5. The method according to any one of the claims 1-4, wherein the at least one cyclone type gas liquid separator (20) receives an inflow of a combined gas liquid material stream (28,29) through a vertically arranged pipe (31) extending into the gravitational gas liquid separator vessel (23,24) from below.

6. An electrolyser system comprising one or more individual pressurised electrolyser stacks (2), wherein
- a first single gravitational gas liquid separator (24) is in fluid communication with all of the catholytic process chambers (5) of the stacks (2) by way of at least one pump (34) and corresponding piping (26), and
- a second single gravitational gas liquid separator (23) is in fluid communication with all of the anolytic process chambers (4) of the stacks (2) by way of at least one pump (36) and corresponding piping (27), wherein the pumps (34, 36) are arranged in respective pipe lines (26,27) and adapted to draw liquid essentially free of gas from a bottom part (32) of the gravitational gas liquid separator vessels (23,24), and feed the liquids at elevated pressures to the process chambers (4,5) of the stack or stacks (2), and
wherein
a. at least one cyclone type gas liquid separator (20) is arranged inside the first gravitational gas liquid separator vessel (24) to receive combined outflows (28) from the catholytic chambers (5), or
b. at least one cyclone type gas liquid separator (20) is arranged inside the second gravitational gas liquid separator vessel (23) to receive combined outflows (29) from anolytic chambers (4), or
c. at least one cyclone type gas liquid separator (20) is arranged inside the first gravitational gas liquid separator vessel (24) to receive combined outflows (28) from the catholytic chambers (5) and another at least at least one cyclone type gas liquid separator (20) is arranged inside the second gravitational gas liquid separator vessel (23) to receive combined outflows (29) from the anolytic chambers (4),
wherein the at least one cyclone type gas liquid separator (20) separates the gas from the liquid along a generally horizontal cyclonic rotation axis (21) inside the respective gas liquid gravitational separator vessel (23,24).

7. The electrolyser system according to claim 6, wherein the at least one cyclone type gas liquid separator (20)
I. has a liquid exit opening (18) adapted to exit a stream of mainly liquid (L) along a generally horizontal cyclonic rotation axis (21) towards a deflection plate (30) above a gas liquid interface of the gravitational gas liquid separators (23, 24),
II. and has a gas exit opening (19) adapted to exit a stream of mainly gas (G) along a generally horizontal cyclonic rotation axis (21) into the gravitational separator vessel (23,24) above the gas liquid interface (17).

8. The electrolyser system according to any one of the claims 6-7, **characterised in that**, the pumps (34, 36) are adapted to provide a pressure increase and corresponding flow rate, whereby any pressure losses in a cyclone type separator (20) is compensated for by increase in pump pressure.

9. The electrolyser system according to any one of the claim 6-8, **characterised in that**, the gas liquid inflow pipe (31) into the cyclone (21) is provided along a vertical axis (10) from below, and that the pipe merges tangentially with a cylindrical inflow part (11) of the cyclone separator (20), which cylindrical inflow part (11) has a generally horizontal centre axis (21).

10. The electrolyser system according to claim 9, **characterised in that**, a frustoconical cyclonic flow path (15) of the cyclone (20) is connected to the cylindrical inflow part (11) and supported from below by a beam (12) connected to the liquid inflow pipe (31).

11. The electrolyser system according to any one of the claims 6-10, **characterised in that**, the deflection plate (30) for the fluid output from the cyclone (20) is an endplate (30) which is also adapted to serve as an openable flanged endplate for inspection of the gravitational separator vessel (23, 24).

## Patentansprüche

1. Verfahren zum Erzeugen und Behandeln eines Zweiphasen-Abstroms aus einem oder mehreren druckbeaufschlagten Elektrolyseurstapeln (2), wobei die druckbeaufschlagten Elektrolyseurstapel (2) dazu eingerichtet sind, Wasser durch Elektrolyse in Wasserstoff und Sauerstoff zu zerlegen, wobei
I. eine Katholytfluidpumpe (34) einen Katholytfluidstrom (26) von einem ersten Schwerkraft-Gas-Flüssigkeitsabscheiderbehälter (24) dem Elektrolyseurstapel oder den Elektrolyseurstapeln (2) zuführt, wobei der Fluidstrom (26) in jedem Stapel auf eine Mehrzahl von Katholyträumen (5) oder Halbzellen verteilt wird, die jeweils eine Wasserstoff erzeugende Kathode (8) umfassen;
II. eine Anolytfluidpumpe (36) einen Anolytfluidstrom (27) von einem zweiten Schwerkraft-Gas-Flüssigkeitsabscheiderbehälter (23) dem Elektrolyseurstapel (2) oder den Elektrolyseurstapeln zuführt, wobei der Fluidstrom in jedem Stapel auf eine Mehrzahl von Anolyträumen (4) oder Halbzellen verteilt wird, die jeweils eine Sauerstoff erzeugende Anode (9) umfassen;
III. jeder Katholytraum (5) einen Teilstrom eines wasserstoffhaltigen, zweiphasigen Katholytstroms (13) an den ersten Gas-Flüssigkeitsabscheiderbehälter (24) abgibt;
IV. jeder Anolytraum (4) einen Teilstrom eines sauerstoffhaltigen, zweiphasigen Anolytstroms (14) an den zweiten Schwerkraft-Gas-Flüssigkeitsabscheiderbehälter (23) abgibt;
V. wobei bei dem Verfahren
a. mindestens ein Zyklon-Gas-Flüssigkeitsabscheider (20), der innerhalb des ersten Schwerkraft-Gas-Flüssigkeitsabscheiderbehälters (24) angeordnet ist, zusammengeführte Abströme (28) aus den Katholyträumen (5) aufnimmt, oder
b. mindestens ein Zyklon-Gas-Flüssigkeitsabscheider (20), der innerhalb des zweiten Schwerkraft-Gas-Flüssigkeitsabscheiderbehälters (23) angeordnet ist,
zusammengeführte Abströme (29) aus den Anolyträumen (4) aufnimmt, oder
c. mindestens ein Zyklon-Gas-Flüssigkeitsabscheider (20), der innerhalb des ersten Schwerkraft-Gas-Flüssigkeitsabscheiderbehälters (24) angeordnet ist, zusammengeführte Abströme (28) aus den Katholyträumen (5) aufnimmt, und mindestens ein weiterer Zyklon-Gas-Flüssigkeitsabscheider (20), der innerhalb des zweiten Schwerkraft-Gas-Flüssigkeitsabscheiderbehälters (23) angeordnet ist, zusammengeführte Abströme (29) aus den Anolyträumen (4) aufnimmt; und
VI. wobei der mindestens eine Zyklon-Gas-Flüssigkeitsabscheider (20) das Gas von der Flüssigkeit entlang einer im Wesentlichen horizontalen zyklonischen Rotationsachse (21) innerhalb des jeweiligen Schwerkraft-Gas-Flüssigkeitsabscheiderbehälters (23, 24) trennt.

2. Verfahren nach Anspruch 1, wobei der mindestens eine Zyklon-Gas-Flüssigkeitsabscheider (20) einen im Wesentlichen flüssigen Stoffstrom (L) oberhalb einer Gas-Flüssigkeits-Grenzfläche austreten lässt und diesen Strom innerhalb des Schwerkraftabscheiderbehälters (23, 24) in einer im Wesentlichen horizontalen Richtung auf eine Ablenkplatte (30) richtet.

3. Verfahren nach Anspruch 1 oder 2, wobei der mindestens eine Zyklon-Gas-Flüssigkeitsabscheider (20) einen im Wesentlichen gasförmigen Stoffstrom (G) entlang einer im Wesentlichen horizontalen Achse (21) oberhalb einer Gas-Flüssigkeits-Grenzfläche innerhalb des Schwerkraftabscheiderbehälters (23, 24) austreten lässt.

4. Verfahren nach einem der Ansprüche 1 bis 3, wobei jede Pumpe (34, 36) eine vorgegebene Druckerhöhung zwischen dem jeweiligen Schwerkraft-Gas-Flüssigkeitsabscheiderbehälter (23, 24) und dem Einlass an den Stapeln (2) bereitstellt, wobei diese Druckerhöhung dazu ausgelegt ist, eine Mindestdurchflussrate von Katholyt und Anolyt durch die Zyklon-Gas-Flüssigkeitsabscheider (20) innerhalb der jeweiligen Schwerkraft-Gas-Flüssigkeitsabscheider (23, 24) sicherzustellen, wenn der Stapel oder die Stapel (2) Wasser elektrolytisch in Wasserstoff und Sauerstoff zerlegen.

5. Verfahren nach einem der Ansprüche 1 bis 4, wobei der mindestens eine Zyklon-Gas-Flüssigkeitsabscheider (20) einen Zufluss eines zusammengeführten Gas-Flüssigkeits-Stoffstroms (28, 29) durch ein vertikal angeordnetes Rohr (31) aufnimmt, das sich von unten in den Schwerkraft-Gas-Flüssigkeitsabscheiderbehälter (23, 24) erstreckt.

6. Elektrolyseursystem, umfassend einen oder mehrere einzelne druckbeaufschlagte Elektrolyseurstapel (2), wobei
- ein einziger erster Schwerkraft-Gas-Flüssigkeitsabscheider (24) über mindestens eine Pumpe (34) und entsprechende Rohrleitungen (26) in Fluidverbindung mit sämtlichen Katholyt-Prozessräumen (5) der Stapel (2) steht, und
- ein einziger zweiter Schwerkraft-Gas-Flüssigkeitsabscheider (23) über mindestens eine Pumpe (36) und entsprechende Rohrleitungen (27) in Fluidverbindung mit sämtlichen Anolyt-Prozessräumen (4) der Stapel (2) steht,
wobei die Pumpen (34, 36) in jeweiligen Rohrleitungen (26, 27) angeordnet und dazu eingerichtet sind, im Wesentlichen gasfreie Flüssigkeit aus einem unteren Teil (32) der Schwerkraft-Gas-Flüssigkeitsabscheiderbehälter (23, 24) abzuziehen und die Flüssigkeiten mit erhöhtem Druck den Prozessräumen (4, 5) des Stapels oder der Stapel (2) zuzuführen, und
wobei
a. mindestens ein Zyklon-Gas-Flüssigkeitsabscheider (20) innerhalb des ersten Schwerkraft-Gas-Flüssigkeitsabscheiderbehälters (24) angeordnet ist, um zusammengeführte Abströme (28) aus den Katholyträumen (5) aufzunehmen, oder
b. mindestens ein Zyklon-Gas-Flüssigkeitsabscheider (20) innerhalb des zweiten Schwerkraft-Gas-Flüssigkeitsabscheiderbehälters (23) angeordnet ist, um zusammengeführte Abströme (29) aus den Anolyträumen (4) aufzunehmen, oder
c. mindestens ein Zyklon-Gas-Flüssigkeitsabscheider (20) innerhalb des ersten Schwerkraft-Gas-Flüssigkeitsabscheiderbehälters (24) angeordnet ist, um zusammengeführte Abströme (28) aus den Katholyträumen (5) aufzunehmen, und mindestens ein weiterer Zyklon-Gas-Flüssigkeitsabscheider (20) innerhalb des zweiten Schwerkraft-Gas-Flüssigkeitsabscheiderbehälters (23) angeordnet ist, um zusammengeführte Abströme (29) aus den Anolyträumen (4) aufzunehmen,
wobei der mindestens eine Zyklon-Gas-Flüssigkeitsabscheider (20) das Gas von der Flüssigkeit entlang einer im Wesentlichen horizontalen zyklonischen Rotationsachse (21) innerhalb des jeweiligen Schwerkraft-Gas-Flüssigkeitsabscheiderbehälters (23, 24) trennt.

7. Elektrolyseursystem nach Anspruch 6, wobei der mindestens eine Zyklon-Gas-Flüssigkeitsabscheider (20)
I. eine Flüssigkeitsaustrittsöffnung (18) aufweist, die dazu eingerichtet ist, einen im Wesentlichen flüssigen Strom (L) entlang einer im Wesentlichen horizontalen zyklonischen Rotationsachse (21) in Richtung einer Ablenkplatte (30) oberhalb einer Gas-Flüssigkeits-Grenzfläche der Schwerkraft-Gas-Flüssigkeitsabscheider (23, 24) austreten zu lassen, und
II. eine Gasaustrittsöffnung (19) aufweist, die dazu eingerichtet ist, einen im Wesentlichen gasförmigen Strom (G) entlang einer im Wesentlichen horizontalen zyklonischen Rotationsachse (21) in den Schwerkraftabscheiderbehälter (23, 24) oberhalb der Gas-Flüssigkeits-Grenzfläche (17) austreten zu lassen.

8. Elektrolyseursystem nach einem der Ansprüche 6 bis 7, **dadurch gekennzeichnet, dass** die Pumpen (34, 36) dazu eingerichtet sind, eine Druckerhöhung und einen entsprechenden Durchfluss bereitzustellen, wobei etwaige Druckverluste in einem Zyklonabscheider (20) durch eine Erhöhung des Pumpendrucks ausgeglichen werden.

9. Elektrolyseursystem nach einem der Ansprüche 6 bis 8, **dadurch gekennzeichnet, dass** das Gas-Flüssigkeits-Zuflussrohr (31) in den Zyklon (21) von unten entlang einer vertikalen Achse (10) vorgesehen ist und dass das Rohr tangential in einen zylindrischen Einlassteil (11) des Zyklonabscheiders (20) übergeht, wobei der zylindrische Einlassteil (11) eine im Wesentlichen horizontale Mittelachse (21) aufweist.

10. Elektrolyseursystem nach Anspruch 9, **dadurch gekennzeichnet, dass** ein kegelstumpfförmiger zyklonischer Strömungsweg (15) des Zyklons (20) mit dem zylindrischen Einlassteil (11) verbunden und von unten durch einen Träger (12) abgestützt ist, der mit dem Flüssigkeitszuflussrohr (31) verbunden ist.

11. Elektrolyseursystem nach einem der Ansprüche 6 bis 10, **dadurch gekennzeichnet, dass** die Ablenkplatte (30) für den Fluidaustritt aus dem Zyklon (20) eine Endplatte (30) ist, die ferner dazu eingerichtet ist, als öffenbare, mit einem Flansch versehene Endplatte zur Inspektion des Schwerkraftabscheiderbehälters (23, 24) zu dienen.

## Revendications

1. Procédé de génération et de traitement d'un écoulement de sortie diphasique provenant d'un ou de plusieurs empilements d'électrolyseur sous pression (2), lesdits empilements d'électrolyseur sous pression (2) étant conçus pour électrolyser de l'eau en hydrogène et en oxygène, dans lequel :
I. une pompe de fluide catholytique (34) fournit un débit de fluide catholytique (26), depuis un premier récipient séparateur gaz-liquide gravitaire (24), à l'empilement ou aux empilements d'électrolyseur (2), ledit débit de fluide (26) étant réparti, dans chaque empilement, entre une pluralité de chambres catholytiques (5) ou demi-cellules comprenant chacune une cathode génératrice d'hydrogène (8) ;
II. une pompe de fluide anolytique (36) fournit un débit de fluide anolytique (27), depuis un second récipient séparateur gaz-liquide gravitaire (23), à l'empilement ou aux empilements d'électrolyseur (2), ledit débit de fluide étant réparti, dans chaque empilement, entre une pluralité de chambres anolytiques (4) ou demi-cellules comprenant chacune une anode génératrice d'oxygène (9) ;
III. chaque chambre catholytique (5) délivre une fraction d'un courant diphasique de catholyte contenant de l'hydrogène (13) au premier récipient séparateur gaz-liquide (24) ;
IV. chaque chambre anolytique (4) délivre une fraction d'un courant diphasique d'anolyte contenant de l'oxygène (14) au second récipient séparateur gaz-liquide gravitaire (23) ;
V. dans lequel procédé
a. au moins un séparateur gaz-liquide de type cyclone (20), disposé à l'intérieur du premier récipient séparateur gaz-liquide gravitaire (24), reçoit des écoulements de sortie combinés (28) provenant des chambres catholytiques (5), ou
b. au moins un séparateur gaz-liquide de type cyclone (20), disposé à l'intérieur du second récipient séparateur gaz-liquide gravitaire (23), reçoit des écoulements de sortie combinés (29) provenant des chambres anolytiques (4), ou
c. au moins un séparateur gaz-liquide de type cyclone (20), disposé à l'intérieur du premier récipient séparateur gaz-liquide gravitaire (24), reçoit des écoulements de sortie combinés (28) provenant des chambres catholytiques (5), et au moins un autre séparateur gaz-liquide de type cyclone (20), disposé à l'intérieur du second récipient séparateur gaz-liquide gravitaire (23), reçoit des écoulements de sortie combinés (29) provenant des chambres anolytiques (4) ; et
VI. dans lequel ledit au moins un séparateur gaz-liquide de type cyclone (20) sépare le gaz du liquide suivant un axe de rotation cyclonique sensiblement horizontal (21) à l'intérieur du récipient séparateur gaz-liquide gravitaire respectif (23, 24).

2. Procédé selon la revendication 1, dans lequel ledit au moins un séparateur gaz-liquide de type cyclone (20) fait sortir un courant de matière principalement liquide (L) au-dessus d'une interface gaz-liquide et dirige ce courant dans une direction sensiblement horizontale vers une plaque de déviation (30) à l'intérieur du récipient séparateur gravitaire (23, 24).

3. Procédé selon la revendication 1 ou 2, dans lequel ledit au moins un séparateur gaz-liquide de type cyclone (20) fait sortir un courant de matière principalement gazeuse (G) suivant un axe sensiblement horizontal (21), au-dessus d'une interface gaz-liquide à l'intérieur du récipient séparateur gravitaire (23, 24).

4. Procédé selon l'une quelconque des revendications 1 à 3, dans lequel chaque pompe (34, 36) fournit une augmentation de pression prédéfinie entre les récipients séparateurs gaz-liquide gravitaires respectifs (23, 24) et l'entrée des empilements (2), ladite augmentation de pression étant adaptée pour assurer un débit minimal de catholyte et d'anolyte à travers les séparateurs gaz-liquide de type cyclone (20) à l'intérieur des séparateurs gaz-liquide gravitaires respectifs (23, 24), lorsque l'empilement ou les empilements (2) électrolysent l'eau en hydrogène et en oxygène.

5. Procédé selon l'une quelconque des revendications 1 à 4, dans lequel ledit au moins un séparateur gaz-liquide de type cyclone (20) reçoit un écoulement entrant d'un courant de matière gaz-liquide combiné (28, 29) à travers un tuyau disposé verticalement (31) qui s'étend par le bas à l'intérieur du récipient séparateur gaz-liquide gravitaire (23, 24).

6. Système d'électrolyseur comprenant un ou plusieurs empilements individuels d'électrolyseur sous pression (2), dans lequel
- un premier séparateur gaz-liquide gravitaire unique (24) est en communication fluidique avec toutes les chambres de procédé catholytiques (5) des empilements (2) par l'intermédiaire d'au moins une pompe (34) et de conduites correspondantes (26), et
- un second séparateur gaz-liquide gravitaire unique (23) est en communication fluidique avec toutes les chambres de procédé anolytiques (4) des empilements (2) par l'intermédiaire d'au moins une pompe (36) et de conduites correspondantes (27),
dans lequel les pompes (34, 36) sont disposées dans les conduites respectives (26, 27) et sont conçues pour aspirer un liquide sensiblement exempt de gaz depuis une partie inférieure (32) des récipients séparateurs gaz-liquide gravitaires (23, 24), et pour fournir les liquides, sous une pression élevée, aux chambres de procédé (4, 5) de l'empilement ou des empilements (2), et
dans lequel
a. au moins un séparateur gaz-liquide de type cyclone (20) est disposé à l'intérieur du premier récipient séparateur gaz-liquide gravitaire (24) afin de recevoir des écoulements de sortie combinés (28) provenant des chambres catholytiques (5), ou
b. au moins un séparateur gaz-liquide de type cyclone (20) est disposé à l'intérieur du second récipient séparateur gaz-liquide gravitaire (23) afin de recevoir des écoulements de sortie combinés (29) provenant des chambres anolytiques (4), ou
c. au moins un séparateur gaz-liquide de type cyclone (20) est disposé à l'intérieur du premier récipient séparateur gaz-liquide gravitaire (24) afin de recevoir des écoulements de sortie combinés (28) provenant des chambres catholytiques (5), et au moins un autre séparateur gaz-liquide de type cyclone (20) est disposé à l'intérieur du second récipient séparateur gaz-liquide gravitaire (23) afin de recevoir des écoulements de sortie combinés (29) provenant des chambres anolytiques (4),
dans lequel ledit au moins un séparateur gaz-liquide de type cyclone (20) sépare le gaz du liquide suivant un axe de rotation cyclonique sensiblement horizontal (21) à l'intérieur du récipient séparateur gaz-liquide gravitaire respectif (23, 24).

7. Système d'électrolyseur selon la revendication 6, dans lequel ledit au moins un séparateur gaz-liquide de type cyclone (20)
I. comprend une ouverture de sortie de liquide (18) conçue pour faire sortir un courant principalement liquide (L), suivant un axe de rotation cyclonique sensiblement horizontal (21), en direction d'une plaque de déviation (30) située au-dessus d'une interface gaz-liquide des séparateurs gaz-liquide gravitaires (23, 24), et
II. comprend une ouverture de sortie de gaz (19) conçue pour faire sortir un courant principalement gazeux (G), suivant un axe de rotation cyclonique sensiblement horizontal (21), dans le récipient séparateur gravitaire (23, 24), au-dessus de l'interface gaz-liquide (17).

8. Système d'électrolyseur selon l'une quelconque des revendications 6 à 7, **caractérisé en ce que** les pompes (34, 36) sont conçues pour fournir une augmentation de pression et un débit correspondant, toute perte de pression dans un séparateur de type cyclone (20) étant compensée par une augmentation de la pression de la pompe.

9. Système d'électrolyseur selon l'une quelconque des revendications 6 à 8, **caractérisé en ce que** le tuyau d'entrée gaz-liquide (31) dans le cyclone (21) est disposé par le bas suivant un axe vertical (10), et **en ce que** le tuyau rejoint tangentiellement une partie d'entrée cylindrique (11) du séparateur cyclonique (20), ladite partie d'entrée cylindrique (11) présentant un axe central sensiblement horizontal (21).

10. Système d'électrolyseur selon la revendication 9, **caractérisé en ce qu'**un trajet d'écoulement cyclonique tronconique (15) du cyclone (20) est relié à la partie d'entrée cylindrique (11) et supporté par le bas par une poutre (12) reliée au tuyau d'entrée de liquide (31).

11. Système d'électrolyseur selon l'une quelconque des revendications 6 à 10, **caractérisé en ce que** la plaque de déviation (30) destinée à la sortie de fluide du cyclone (20) est une plaque d'extrémité (30), qui est également conçue pour servir de plaque d'extrémité à bride ouvrable permettant l'inspection du récipient séparateur gravitaire (23, 24).
